# EUROPEAN PATENT SPECIFICATION

(11) **EP 0 964 072 B1**
(45) Date of publication and mention of the grant of the patent: **23.06.2004**
(21) Application number: 98937787.4
(22) Date of filing: 12.08.1998
(51) Int. Cl.: C22C 38/00

(54) **AUSTENITIC STAINLESS STEEL WITH RESISTANCE TO DETERIORATION BY NEUTRON IRRADIATION**
AUSTENITISCHER ROSTFREIER STAHL MIT WIDERSTAND GEGEN SCHÄDIGUNG DURCH NEUTRONENSTRAHLUNG
ACIER INOXYDABLE AUSTENITIQUE RESISTANT AU RAYONNEMENT NEUTRONIQUE

(30) Priority: 19.08.1997 JP 22259397
(43) Date of publication of application: 15.12.1999
(73) Proprietor: Mitsubishi Heavy Industries, Ltd., Tokyo 100-8315 (JP)
(72) Inventor: YONEZAWA, Toshio, Mitsubishi Heavy Ind. Ltd., Takasago-shi, Hyogo-ken 676-8686 (JP); IWAMURA, Toshihiko, Mitsubishi Heavy Ind. Ltd., Takasago-shi, Hyogo-ken 676-8686 (JP); FUJIMOTO, Koji, Mitsubishi Heavy Ind. Ltd., Takasago-shi, Hyogo-ken 676-8686 (JP)
(74) Representative: Goddard, David John
(86) International application number: PCT/JP1998/003584
(87) International publication number: WO 1999/009229

(56) References cited:
- EP-A- 0 347 130
- EP-A- 0 725 155
- JP-A- 9 125 205
- JP-A- 63 286 556
- JP-B- 61 051 026

## Description

### BACKGROUND OF THE INVENTION

### 1. Field of the Invention

The present invention relates to an austenitic stainless steel having excellent resistance to neutron-irradiation-induced degradation which is used, for example, as a structural member inside of the reactor of a light water reactor type nuclear power plant.

### 2. Description of the Related Art

Austenitic stainless steels which have conventionally been used as a structural member (bolt, plate and the like) inside of the reactor of a light water reactor type nuclear power plant such as SUS 304 and SUS 316 tend to lack Cr or have concentrated Ni, Si, P, S and the like in its grain boundary when used for long years and subjected to neutron irradiation of 1 × 10²¹ n/cm² (E>1MeV) or greater. It is known that in such a case, in the existence of a high load stress, the austenitic stainless steel tends to cause stress corrosion cracking (SCC) under the using environment of a light water reactor. Such a phenomenon is called "irradiation-assisted stress corrosion cracking" (IASCC). Although there is a strong demand for the development of a material having a low IASCC sensitivity, no such material having a low IASCC sensitivity, in other words, having excellent resistance to neutron-irradiation-induced degradation has yet been industrialized.

As the structural member inside of the reactor of a light water reactor type atomic power plant, austenitic stainless steels such as SUS 304 and SUS 316 have been used. When such members are used for long years and are subjected to neutron irradiation of 1 × 10²¹ n/cm² (E>1MeV) or greater, a further aggravating change is observed in the concentration of an element in the vicinity of their grain boundary which has not presented or has presented only slightly prior to use. In other words, the vicinity of the grain boundary lacks Cr and Mo or is enriched with elements such as Ni, Si, P and S. This phenomenon is called "radiation-induced segregation (RIS)". It is known that as described above, in the segregational state, presence of a high load stress or residual stress tends to cause stress corrosion cracking (irradiation assisted stress corrosion cracking: IASCC) in water of high temperature and high pressure, that is, the neutron irradiation environment in a light water reactor.

The present inventors developed a Ni-rich austenitic stainless steel as a material having excellent resistance to neutron-irradiation-induced degradation by thermally treating a stainless steel of a specific composition, that is, a Ni-rich stainless steel so as to optimize the crystalline form in the alloy and then subjecting the resultant steel to post processing and proposed it previously (Japanese Patent Application Laid-Open No. 9-125205).

### SUMMARY OF THE INVENTION

An object of the present invention is to provide, in view of the situation of the above-described prior art, a structure material which uses a conventional structural material SUS 304, SUS 316 or SUS 310S specified in JIS (Japanese Industrial Standards) as a base alloy without using a high-Ni stainless steel having a high Ni content, and does not cause stress corrosion cracking (SCC) in the using environment (in water of high temperature and high pressure) of a light water reactor owing to resistance to neutron-irradiation-induced degradation.

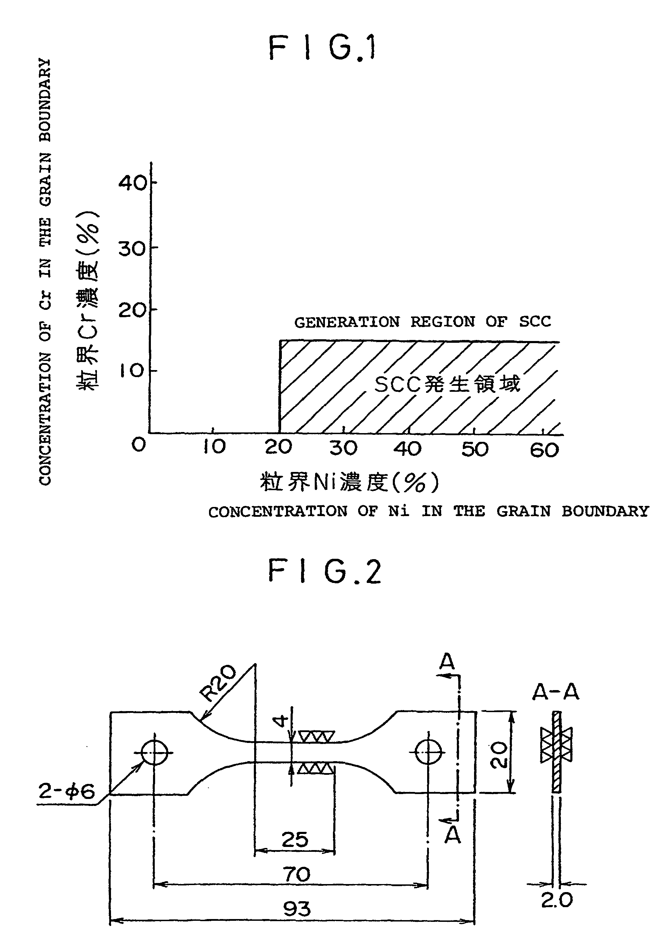

With a view to overcoming the above-described problem, the present inventors have proceeded with various investigations on the properties of an austenitic stainless steel. As a result, it has been found that when based on the value of the intergranular segregation of a neutron irradiated material measured by S. Dumbill and W. Hanks (Sixth International Symposium on Environmental Degradation of Materials in Nuclear Power Systems-Water Reactors, 521(1993)), concentration changes of Cr and Ni in the grain boundary calculated by the present inventors and test results of SCC of neutron-irradiated SUS 304 and SUS 316 which the present inventors have so far acquired were investigated by comparison, the above-described IASCC occurs, as shown in FIG. 1, when the concentration of Cr becomes not greater than 15% and that of Ni becomes not less than 20% in the grain boundary after neutron irradiation. The shaded portion of FIG. 1 illustrates the generation region of SCC.

The present inventors presumed that such a phenomenon of IASCC occurs because the element concentration in the grain boundary approaches to that of the composition of Alloy 600 (NCF600 of JIS). Described specifically, they presume that neutron irradiation lowers the Cr concentration and raises the Ni concentration of the composition in the grain boundary, which makes the composition close to that of Alloy 600 (non-irradiated material; Ni≥72%, Cr=14~17%), whereby stress corrosion cracking (PWSCC: stress corrosion cracking which occurs in a primary water) occurs in water of high temperature and high pressure as can be observed frequently in Alloy 600. Under the present state, however, the occurring mechanism of PWSCC has not been elucidated in detail.

It is known that the conventional Ni-based alloy {Incone 1750 (NCF750 of JIS) or Alloy 690 (NCF690 of JIS)} is able to have strengthened grain boundary and improved PWSCC resistance by subjecting it to the aging treatment under specific conditions (special thermal treatment), thereby precipitating, in the grain boundary, N₂₃C₆ (a carbide having mainly Cr as M) matched with the matrix phase and causing matched precipitation of this M₂₃C₆ matched in the grain boundary. The present inventors have found that when such special thermal treatment so far employed for a Ni-based alloy is applied to the conventional SUS 304, SUS 316 or SUS 310S, the grain boundary can be reinforced and SCC resistance can be improved by precipitating M₂₃C₆ matched with the matrix phase in the grain boundary even if neutron irradiation lowers the Cr concentration and raises the Ni concentration of the composition in the vicinity of the grain boundary.

Based on the above findings, the present inventors proceeded with a further investigation and completed the present invention by employing SUS 304 or SUS 316 as a base alloy and using solid solution treatment under specific conditions, aging treatment (thermal treatment) to optimize the crystalline form in the alloy and post-processing (cold working) treatment in combination.

The present invention provides the austenitic stainless steel having resistance to neutron-irradiation-induced degradation which is obtained by subjecting a stainless steel to thermal solid solution treatment at 1,000 to 1,180°C and then subjecting the so-treated steel to aging treatment at 600 to 750°C, wherein said stainless steel consists of not more than 0.08% by weight of C, not more than 2.0% by weight of Mn, not more than 1.5% by weight of Si, not more than 0.045% by weight of P, not more than 0.030% by weight of S, 8.0 to 22.0% of by weight Ni, 16.0 to 26.0% of by weight Cr and the balance of Fe.

The austenitic stainless steel according to the present invention can be obtained by subjecting said stainless steel to a cold working treatment up to 30% in between said thermal solid solution treatment and said aging treatment.

Said stainless steel which is used in the present invention may contain 3.0% by weight or less of Mo. For example, said stainless steel may be SUS 316 specified in JIS. When SUS 316 is used, the temperature range of said thermal solid solution treatment is 1,000 to 1,150°C.

Further, for example, said stainless steel may be SUS 304 specified in JIS. When SUS 304 is used, the temperature range of said thermal solid solution treatment is 1,000 to 1,150°C.

Furthermore, for example, said stainless steel may be SUS 310S specified in JIS. When SUS 310S is used, the temperature range of said thermal solid solution treatment is 1,030 to 1,180°C.

### BRIEF DESCRIPTION OF THE DRAWINGS

FIG. 1 illustrates the relationship between Cr and Ni concentrations and SCC sensitivity in the grain boundary of an alloy as assumed from the measured value of intergranular segregation of a neutron-irradiated material; and FIG. 2 illustrates the shape and size of the test piece used in the SCC accelerated test.

### DETAILED DESCRIPTION OF THE PREFERRED EMBODIMENTS

The austenitic stainless steel of the present invention which is resistant to neutron-irradiation-induced degradation is a material having excellent SCC resistance under the environment of a light water reactor, more specifically, in high temperature and high pressure water of about 270 to 360°C/70 to 160 atm, even after exposure to neutron irradiation of at least 1 × 10²² n/cm² (E>1MeV). The other structural material used inside of the reactor is mainly an austenitic stainless steel such as SUS 304 or SUS 316. It is therefore necessary to use a material having a similar thermal expansion coefficient to that of SUS 304 or SUS 316 to reduce the stress imparted by the difference in a thermal expansion coefficient between different structural materials. The austenitic stainless steel according to the present invention maintains a thermal expansion coefficient of 15 × 10⁻⁶ to 19 × 10⁻⁶/K, which is close to 16 × 10⁻⁶ to 18 × 10⁻⁶/K, that is, an average thermal expansion coefficient of conventionally used SUS 304 or SUS 316 in the temperature range from room temperature(20°C) to 400°C.

Examples of the austenitic stainless steel having such properties include austenitic stainless steels obtained by using, as a base material, SUS 304 which is specified in JIS and is composed, in weight %, of not more than 0.08% of C, not more than 2.0% of Mn, not more than 1.0% of Si, not more than 0.045% of P, not more than 0.030 % of S, 8.0 to 10.5% of Ni, 18.00 to 20.00% of Cr and the balance of Fe, SUS 316 which is specified in JIS and is composed, in weight %, of not more than 0.08% of C, not more than 2.0% of Mn, not more than 1.0% of Si, not more than 0.045% of P, not more than 0.030% of S, 10.0 to 14.0% of Ni, 16.00 to 18.00% of Cr, 2.00 to 3.00% of Mo and the balance of Fe or SUS 310S which is specified in JIS and is composed, in weight %, of not more than 0.08% of C, not more than 2.00% of Mn, not more than 1.50% of Si, not more than 0.045% of P, not more than 0.030% of S, 19.0 to 22.0% of Ni, 24.00 to 26.00% of Cr and the balance of Fe, subjecting the steel base to thermal solid solution treatment at 1,000 to 1,150°C(SUS 304 or SUS 316) or 1,030 to 1,180°C(SUS 310S) or, if necessary, cold working treatment up to the extent of the treatment of 30% of the extent of the treatment in a temperature range not higher than the recrystallization point after thermal solid solution treatment at the above-described temperature; and then subjecting the so-treated steel to aging treatment at 600 to 750°C for up to 100 hours.

In the above-exemplified stainless steel, precipitation of M₂₃C₆ (a carbide having mainly Cr as M) matched with a matrix phase appears in the grain boundary, which makes it possible to strengthen the grain boundary and improve the SCC resistance.

The SUS 304 or SUS 316 having the above-described composition is subjected to solid solution treatment at 1,000 to 1,150°C or the SUS 310S having the above-described composition is subjected to solid solution treatment at 1,030 to 1,180°C, whereby a dissolved atom in the alloy forms a solid solution in the matrix. The austenitic stainless steel so treated is, if desired, subjected to cold working treatment of 30% at the maximum within a temperature range not higher than its recrystallization point to proliferate in the crystal grains dislocations due to sliding deformation, whereby strength as a bolt material or the like can be heightened without losing SCC resistance. The heating treatment (aging treatment) at 600 to 750°C subsequent to the above-described solid solution treatment or both the solid solution treatment and cold working treatment permits the precipitation of M₂₃C₆ (a carbide having mainly Cr as M) matched with the matrix phase in the grain boundary, which strengthens the grain boundary and improves SCC resistance. In addition, if necessary, cold working treatment up to 30% is done to assure the strength of products to which the present invention is applied.

To attain the object of the present invention, the degree of cold working treatment is not required to be so large and 30% or so is sufficient at the maximum. When the degree exceeds 30%, the stainless steel so obtained is not suitable as a structural material because of a reduction of ductility in spite of an increase in the strength.

When the aging treatment is effected at a temperature lower than 600°C, it is impossible to sufficiently precipitate M₂₃C₆ matched with the matrix phase in the grain boundary even by heating for long hours and therefore, impossible to obtain target SCC resistance. When the aging temperature exceeds 750°C, on the other hand, the M₂₃C₆ matched with the matrix phase forms a solid solution again and precipitation does not occur. Accordingly, a preferred temperature range causing sufficient precipitation of M₂₃C₆ is from 600 to 750°C. Although the aging treatment for short time is effective within a temperature range of 600 to 750°C, it is desired to carry out the treatment for one hour at the minimum in order to sufficiently precipitate M₂₃C₆ and attain high SCC resistance. In general, up to 100 hours or so are sufficient for the treatment. In addition, if necessary, cold working treatment up to 30% is done to assure the strength of products to which the present invention is applied.

Since it is thinkable that irradiation-assisted stress corrosion cracking (IASCC) occurs almost simultaneously with deterioration of the material attributable to high load stress and neutron irradiation, the present invention aims at controlling the composition of the material and metallographic structure in advance so as to suppress the deterioration within an extent not causing IASCC easily even when the material is exposed to neutron irradiation. In other words, the present invention features that SUS 304, SUS 316 or SUS 310S is used as a base alloy to minimize the difference from the thermal expansion coefficient of the conventional material even after the heat treatment; and that a carbide in the grain boundary is, in advance, imparted with the precipitation state under which IASCC does not occur easily.

### Examples

Four kinds of materials to be tested were prepared as follows. Two kinds were obtained by subjecting SUS 304 and SUS 316 having chemical compositions as shown in Table 1, respectively, to solid solution treatment at 1,050°C for an hour, followed by aging treatment (thermal treatment) for 100 hours at temperatures as shown in Tables 2 to 9.

The other two kinds were obtained by, subsequent to the solid solution treatment in a similar manner, subjecting the steels so treated to cold working treatment of a range 10 to 30%, followed by aging treatment (thermal treatment) for 100 hours at temperatures as shown in Tables 2 to 9.

Those four kinds of the test materials were processed into test pieces having the shape and size as shown in FIG. 2 (in FIG. 2, the unit is mm), followed by neutron irradiation of at least 5 × 10²² n/cm² (E>1Mev) at 320°C by using an atomic reactor for material testing. Then, a stress corrosion cracking acceleration test was conducted at a strain rate of 0.1 µm/min under the simulated environment of a light water reactor (at 360°C and 160 kgf/cm²G in water of high temperature and high pressure). Incidentally, these materials do not show SCC sensitivity without irradiation so that irradiated material was provided for the evaluation.

**Table 1**

| | | Chemical component (wt.%), balance: Fe | | | | | | |
|---|---|---|---|---|---|---|---|---|
| | C | Si | Mn | P | S | Ni | Cr | Mo |
| SUS 306 | 0.06 | 0.55 | 1.52 | 0.02 | 0.021 | 8 | 18 | - |
| SUS 316 | 0.04 | 0.75 | 1.65 | 0.018 | 0.011 | 12 | 16 | 2.6 |
| SUS 310S | 0.02 | 0.32 | 1.14 | 0.024 | 0.001 | 19.58 | 24.31 | - |

Test results are shown in Tables 2 to 9. As shown in Tables 2 to 9, an average thermal expansion coefficient, from room temperature to 400°C, of the test piece so obtained ranges from 15.7 × 10⁻⁶ to 16.8 × 10⁻⁶/K for SUS 304 series and from 16.2 × 10⁻⁶ to 17.7 × 10⁻⁶/K for SUS 316 series. In the "precipitation state of carbide M₂₃C₆" of Table 2, when M₂₃C₆ is semi-continuously precipitated in the grain boundary as a result of the observation through a transmission electron microscope (TEM) and an electron microscope (SEM), the precipitation of a carbide is "observed". When no precipitation is found, or coarse growth of grains are found and thus the precipitation is not semi-continuous, the precipitation of a carbide is "not observed". "IGSCC" means intergranular stress corrosion cracking and "IGSCC fracture ratio" means a value represented by [(Σ area of fractured region in the grain boundary) / (Σ total area of fractured region of a test piece)]× 100 (%). "SCC sensitivity" is evaluated based on the intergranular fracture ratio (IGSCC fracture ratio) of a broken surface after the stress corrosion cracking acceleration test. When an IGSCC fracture ratio exceeds 5%, the material is judged "sensitive" (A). When it is not higher than 5%, on the other hand, the material is judged "not sensitive" (B). In addition, "SSRT" means a low strain rate tensile test.

The following can be understood from Tables 2 to 9. It is suitable for the tested material that an intergranular fracture ratio (IGSCC fracture ratio) which is presumed to have the greatest influence on IASCC resistance is near 0 (preferably, not higher than 5%). Further, the tested material in which M₂₃C₆ matched with the matrix phase has been precipitated in the grain boundary is obtained by aging treatment within a temperature range of 600 to 750°C and a duration of 5 to 100 hours. It has been confirmed using a transmission electron microscope (TEM) and an electron microscope (SEM) that in those test materials, M₂₃C₆ showed sufficient precipitation (semi-continuous precipitation). It can be understood that those test materials have excellent SCC resistance irrespective of the cold working treatment.

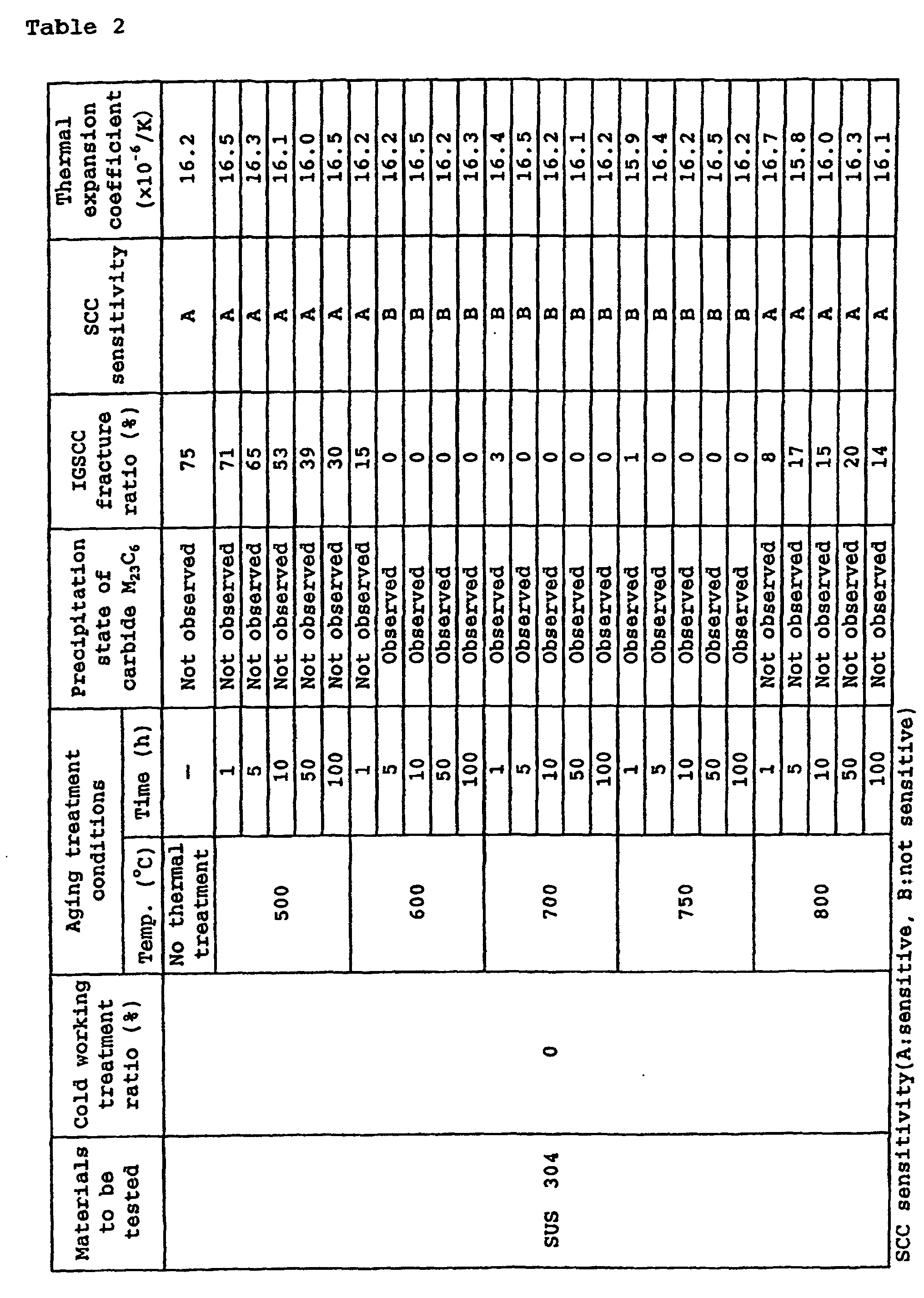

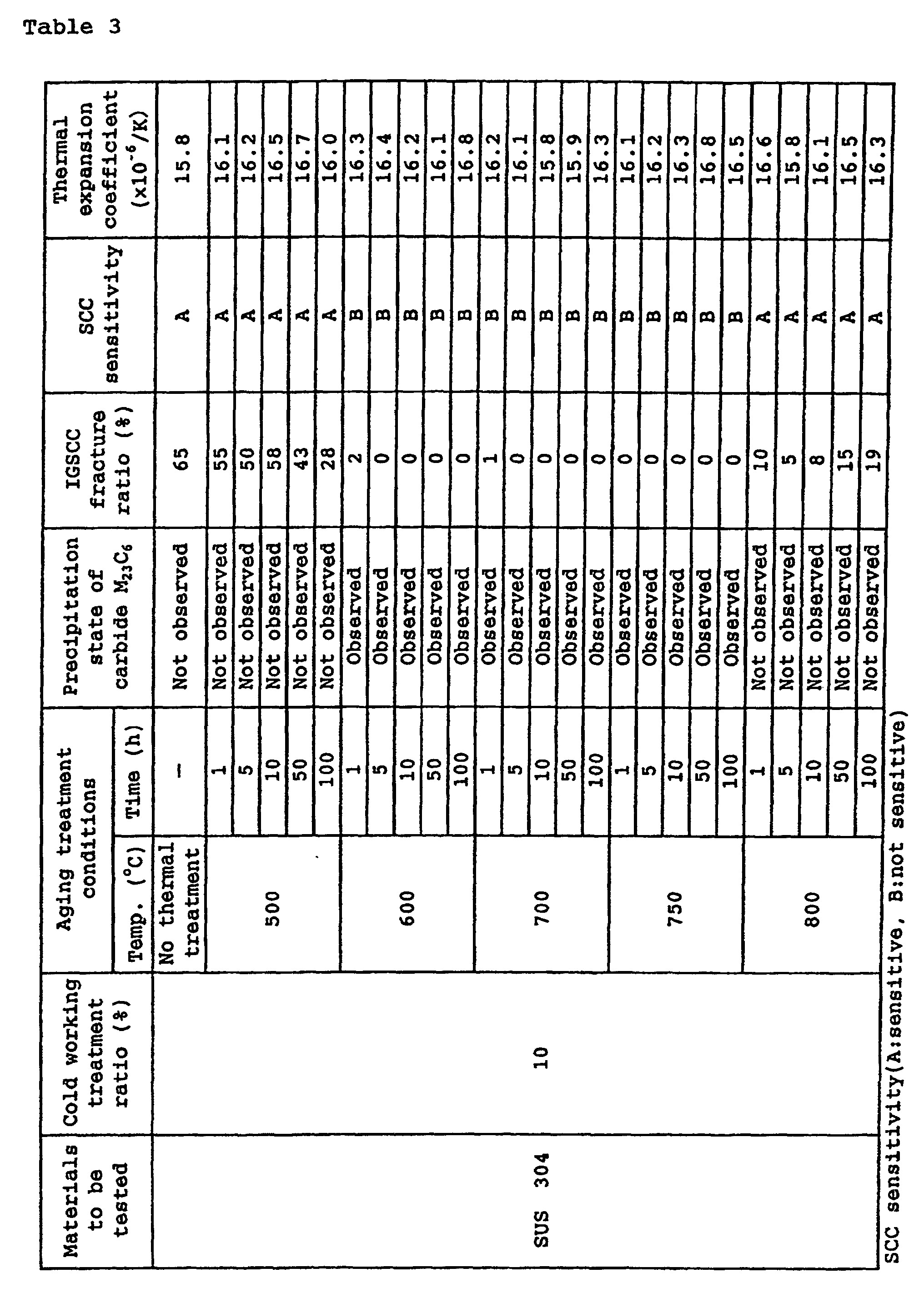

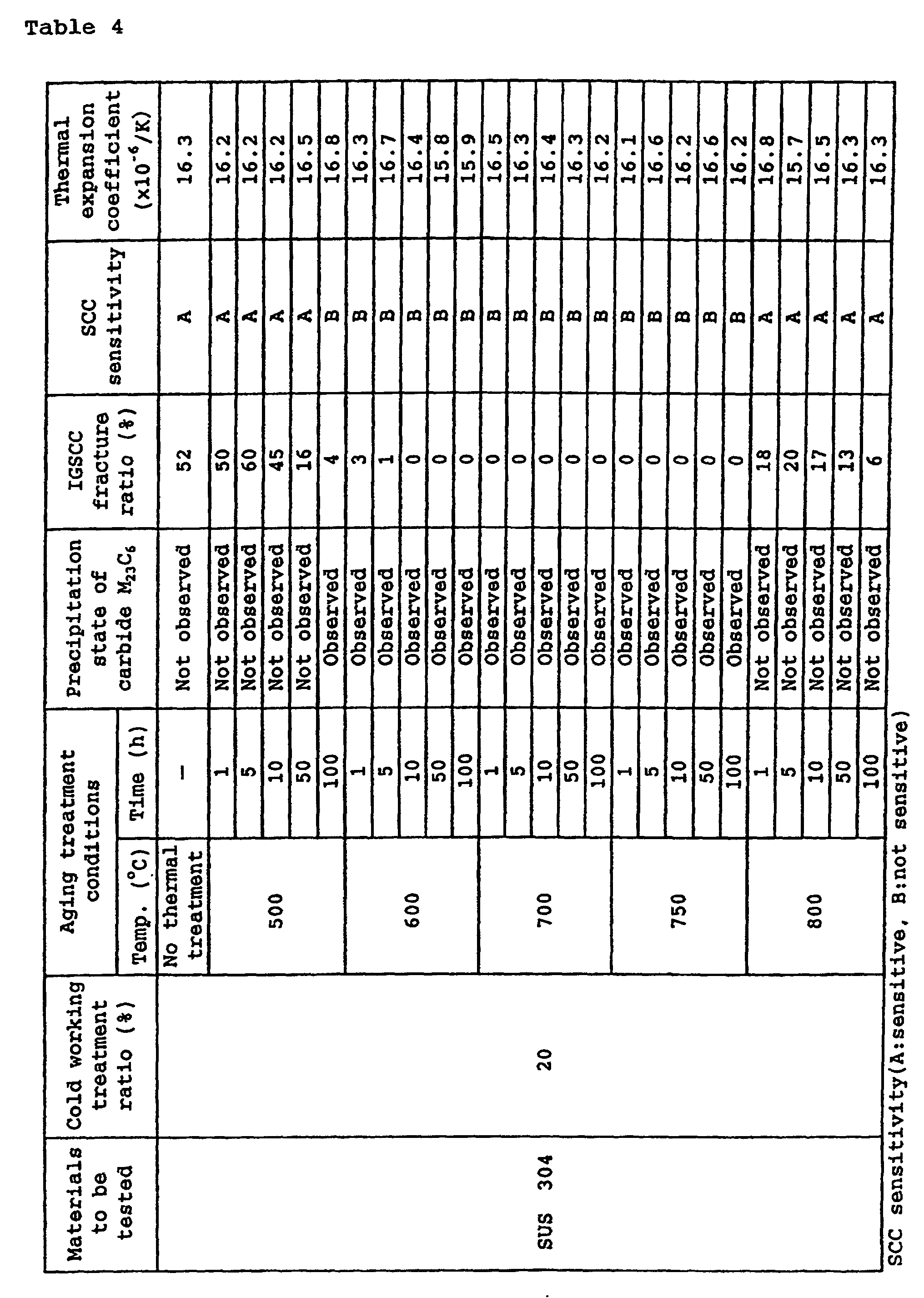

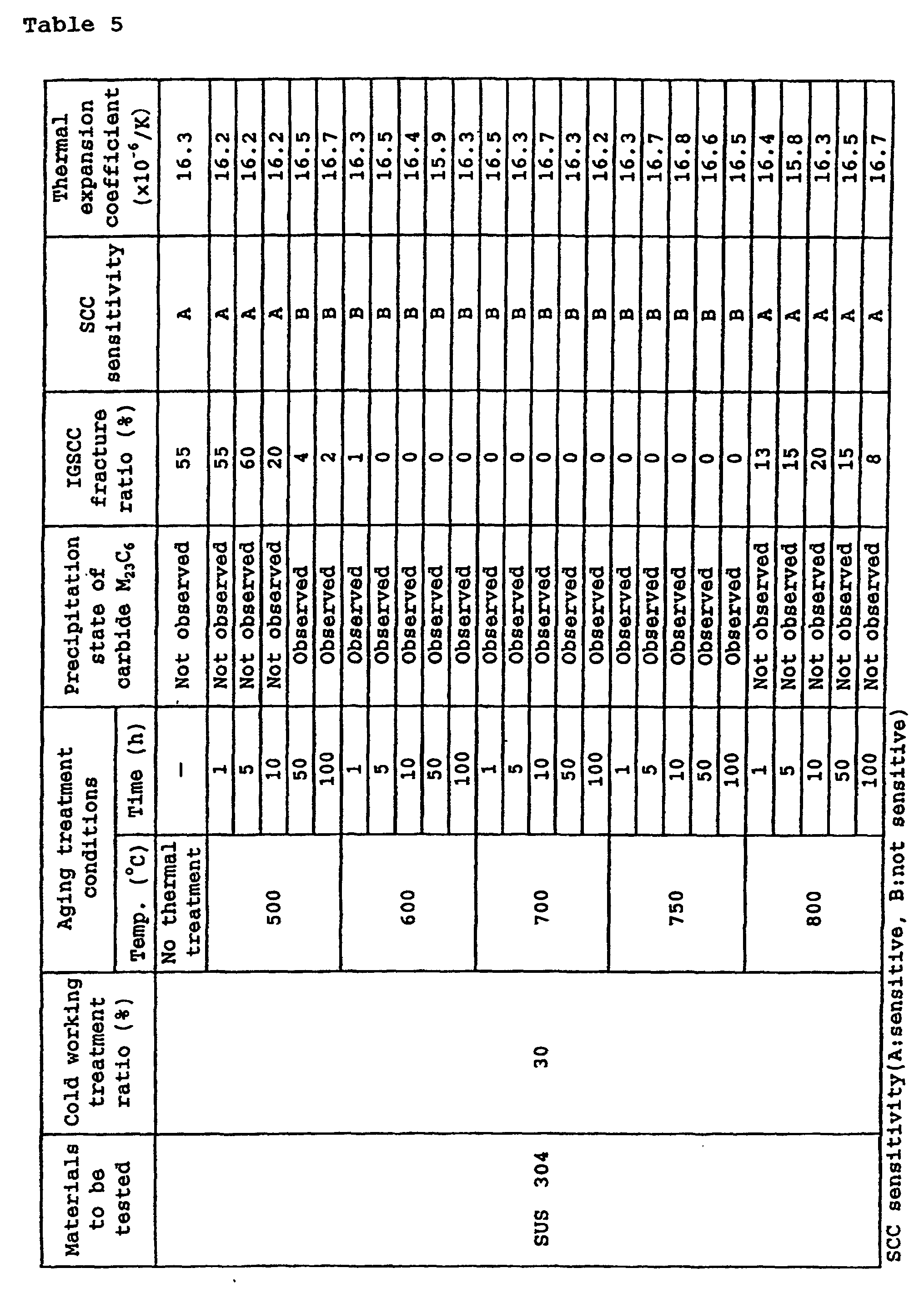

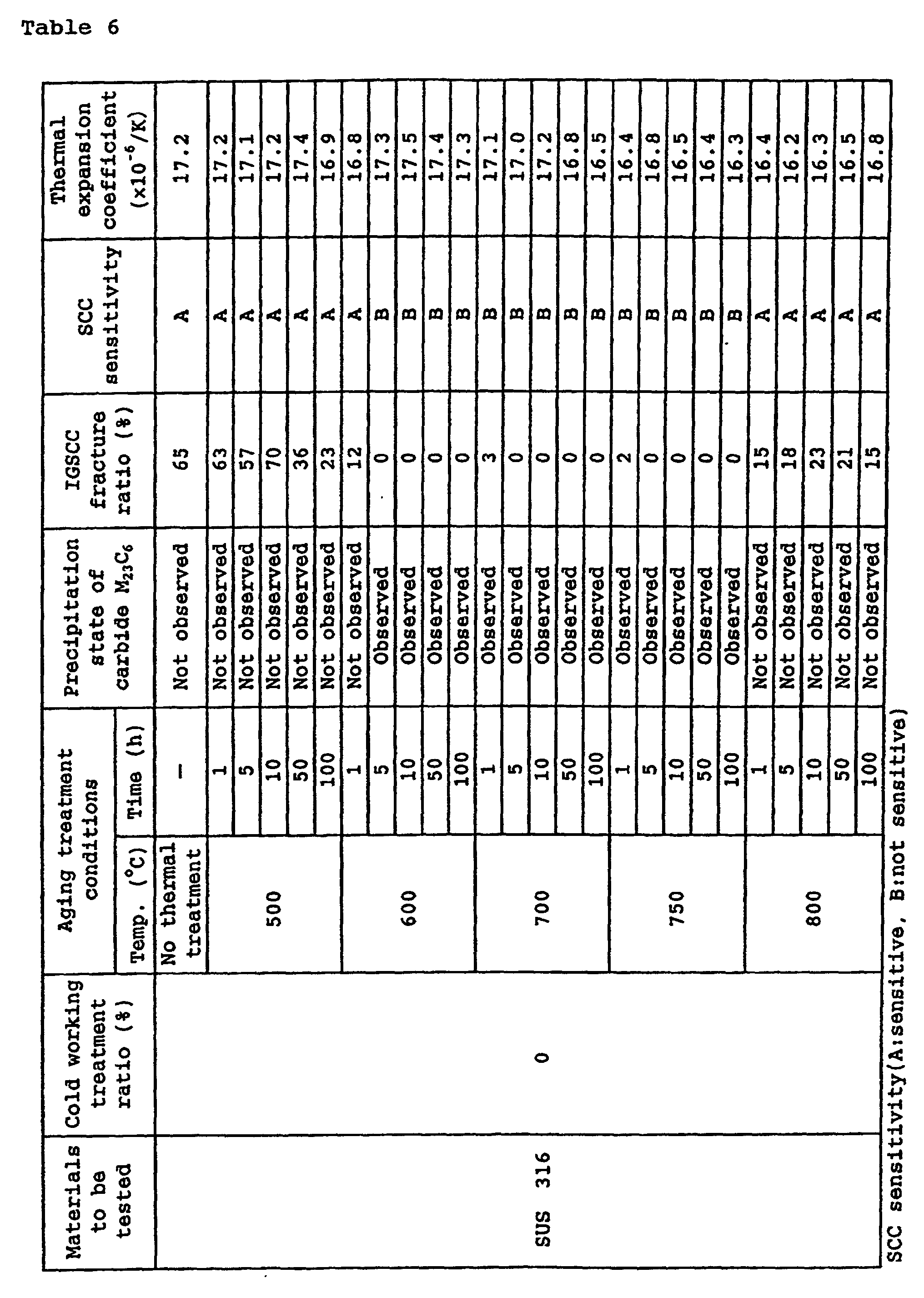

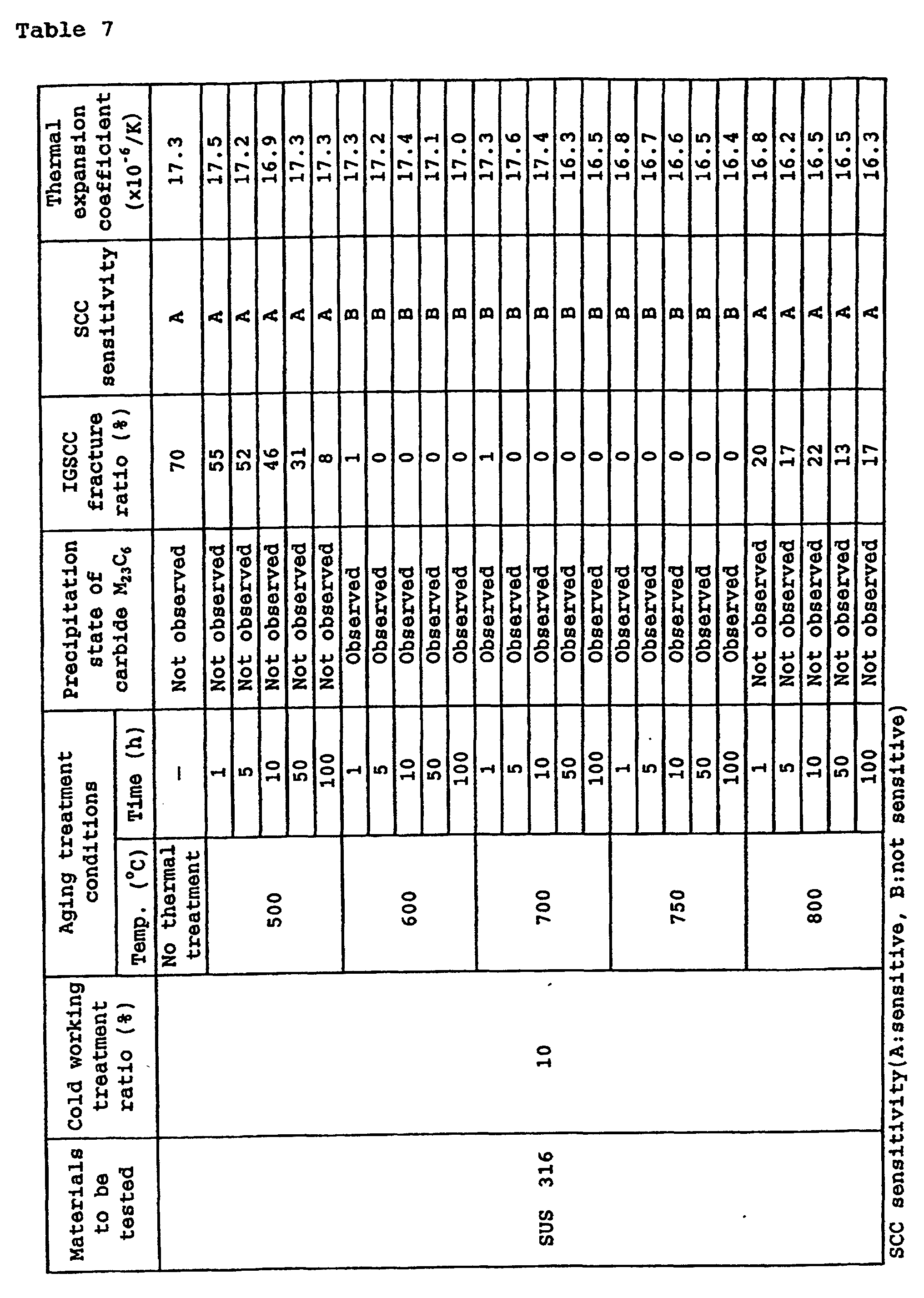

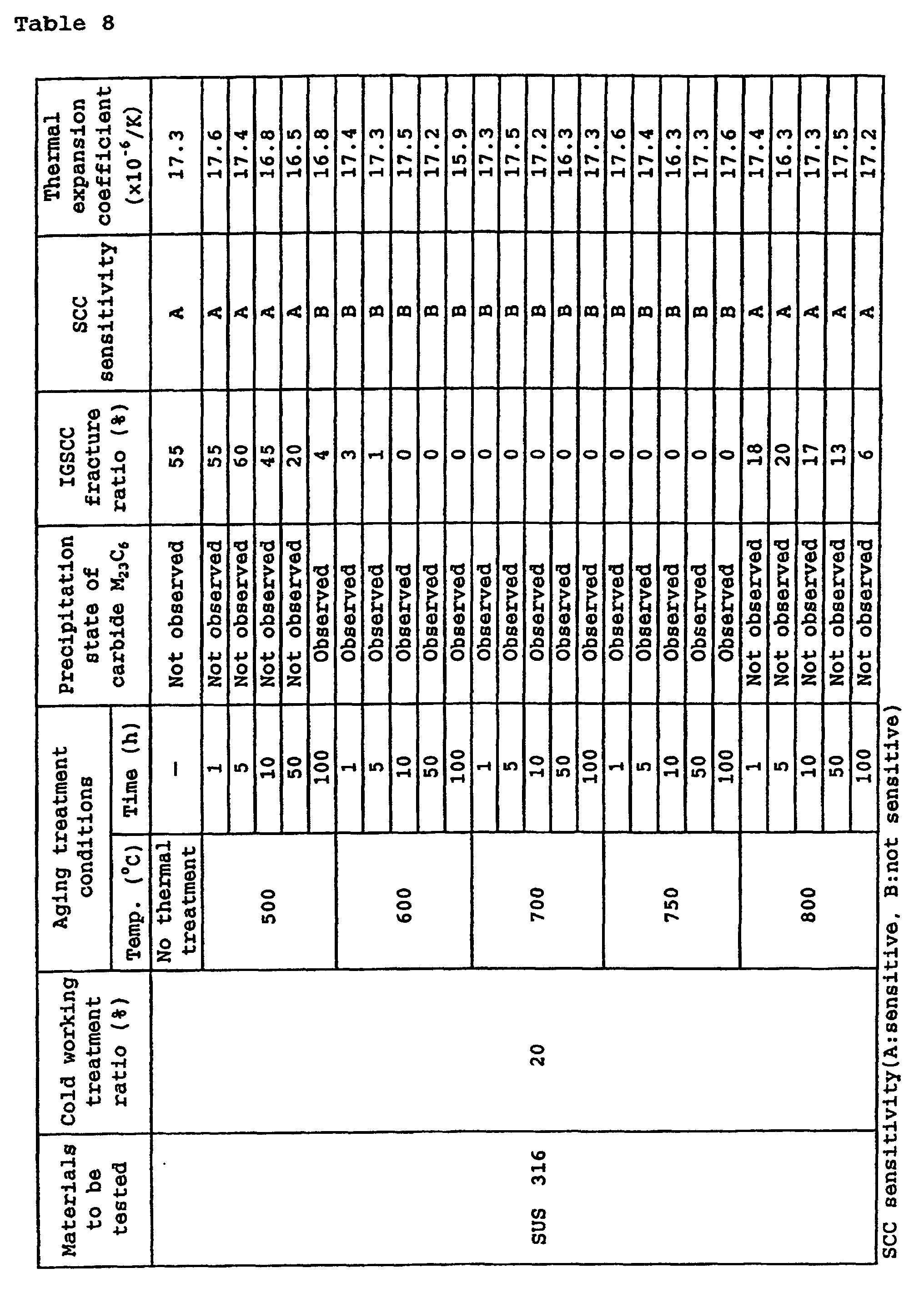

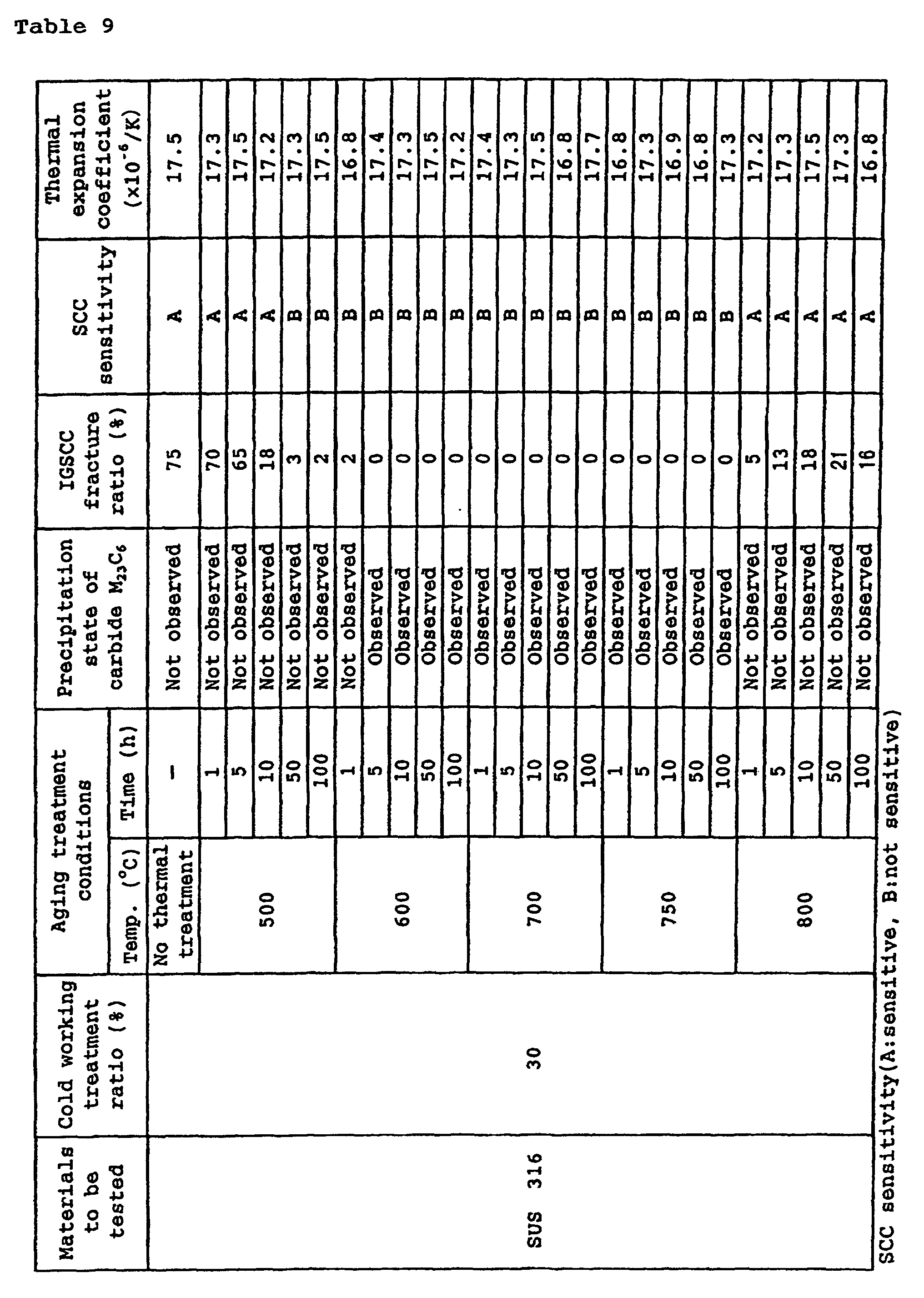

Further, two kinds of materials to be tested were prepared as follows. One kind was obtained by subjecting SUS 310S having chemical compositions as shown in Table 1, to solid solution treatment at 1,050°C for an hour, followed by aging treatment (thermal treatment) for 100 hours at temperatures as shown in Table 10.

Another kind was obtained by, subsequent to the solid solution treatment in a similar manner, subjecting the steels so treated to cold working treatment of about 20%, followed by aging treatment (thermal treatment) for 100 hours at temperatures as shown in Table 10.

Those two kinds of the test materials were processed into test pieces having the shape and size as shown in FIG. 2 (in FIG. 2, the unit is mm), followed by neutron irradiation of at least 5 × 10²² n/cm² (E>1MeV) at 320°C by using an atomic reactor for material testing. Then, a stress corrosion cracking acceleration test was conducted at a strain rate of 0.5 µm/min under the simulated environment of a light water reactor (at 360°C and 214 kgf/cm²G in water of high temperature and high pressure). Test results are shown in Table 10.

**Table 10**

| Materials to be tested | Aging treatment conditions | Precipitation state of carbide M₂₃C₆ | IGSCC fracture ratio (%) | SCC sensitivity |
|---|---|---|---|---|
| 310S stainless steel | No thermal treatment | Not observed | 46 | A |
| | 500°C×100h | Not observed | 39 | A |
| | 550°C×100h | Not observed | 28 | A |
| | 600°C×100h | Observed | 4 | B |
| | 650°C×100h | Observed | 2 | B |
| | 700°C×100h | Observed | 1 | B |
| | 750°C×100h | Observed | 3 | B |
| | 800°C×100h | Not observed | 19 | A |
| 310S stainless steel +Cold working treatment (20%) | No thermal treatment | Not observed | 43 | A |
| | 500°C×100h | Not observed | 37 | A |
| | 550°C×100h | Not observed | 24 | A |
| | 600°C×100h | Observed | 3 | B |
| | 650°C×100h | Observed | 1 | B |
| | 700°C×100h | Observed | 0 | B |
| | 750°C×100h | Observed | 1 | B |
| | 800°C×100h | Not observed | 16 | A |
| SCC sensitivity(A:sensitive, B:not sensitive) | | | | |

In Table 10, the terms "precipitation state of carbide M₂₃C₆", "IGSCC fracture ratio" and "SCC sensitivity" are respectively similar to the terms in tables 2 to 9.

The following can be understood from Table 10. It is suitable for the tested material that an intergranular fracture ratio (IGSCC fracture ratio) which is presumed to have the greatest influence on IASCC resistance is near 0 (preferably, not higher than 5%). Further, the test material in which M₂₃C₆ matched with the matrix phase has been precipitated in the grain boundary is obtained by aging treatment of 100 hours and within a temperature range of 600 to 750°C. It has been confirmed using a transmission electron microscope (TEM) and an electron microscope (SEM) that in those test materials, M₂₃C₆ showed sufficient precipitation (semi-continuous precipitation). It can be understood that those test materials have excellent SCC resistance irrespective of the cold working treatment.

### Applicability in Industry

The austenitic stainless steel of the present invention having resistance to neutron-irradiation-induced degradation excellent in resistance to neutron-irradiation-induced degradation. Described specifically, even after the stainless steel of the present invention is exposed to neutron irradiation of about 1 x 10²² n/cm² (E>1 MeV) which is the maximum dose to which a light water reactor is exposed in total until the end of the plant life, stress corrosion cracking (SCC) does not occur easily in the water environment of a light water reactor. Accordingly, the stainless steel of the present invention used as the core material of a light water reactor makes it possible to carry out operation without a possibility of causing IASCC until the life end of the reactor, whereby the reactor is able to have further improved reliability.

In other words, the austenitic stainless steel of the present invention having resistance to neutron-irradiation-induced degradation is excellent in stress corrosion induced deterioration is excellent in stress corrosion cracking resistance in water of high temperature and high pressure of 270 to 350°C/70 to 160 atm and has an average thermal expansion coefficient, from room temperature to 400°C, within a range of from 15 × 10⁻⁶ to 19 × 10⁻⁶/K even after being exposed to neutron irradiation up to 1 × 10²² n/cm² (E>1 MeV).

In addition, the austenitic stainless steel according to the present invention can be produced using as a base alloy conventionally employed SUS 304 or SUS 316 so that the same materials as used in the conventional production method can be employed. The stainless steel of the present invention is accompanied with a further merit that even by the thermal treatment for the improvement of resistance to neutron-irradiation-induced degradation, stress resulting from a difference in thermal expansion coefficient between materials does not occur because the stainless steel has almost a similar thermal expansion coefficient to that of SUS 304 or SUS 316 used in the practical reactor.

## Claims

1. The austenitic stainless steel having resistance to neutron-irradiation-induced degradation which is obtained by subjecting a stainless steel to thermal solid solution treatment at 1,000 to 1,180°C and then subjecting the so-treated steel to aging treatment at 600 to 750°C, wherein said stainless steel consists of not more than 0.08% by weight of C, not more than 2.0% by weight of Mn, not more than 1.5% by weight of Si, not more than 0.045% by weight of P, not more than 0.030% by weight of S, 8.0 to 22.0% by weight of Ni, 16.0 to 26.0% by weight of Cr optionally not more than 3.0% by weight of Mo and the balance of Fe.

2. The austenitic stainless steel having resistance to neutron-irradiation-induced degradation according to claim 1 which is obtained by subjecting said stainless steel to a cold working treatment up to 30% in between said thermal solid solution treatment and said aging treatment.

3. The austenitic stainless steel having resistance to neutron-irradiation-induced degradation according to claim 1 or 2 which contains 3.0% by weight or less of Mo.

4. The austenitic stainless steel having resistance to neutron-irradiation-induced degradation according to claim 1 which is obtained by said thermal solid solution treatment at 1,000 to 1,150°C, wherein said stainless steel is SUS 304 specified in JIS.

5. The austenitic stainless steel having resistance to neutron-irradiation-induced degradation according to claim 1 or 2 which is obtained by said thermal solid solution treatment at 1,000 to 1,150°C, wherein said stainless steel is SUS 316 specified in JIS.

6. The austenitic stainless steel having resistance to neutron-irradiation-induced degradation according to Claim 1 or 2 which is obtained by said thermal solid solution treatment at 1,030 to 1,180°C, wherein said stainless steel is SUS 310S specified in JIS.

## Patentansprüche

1. Austenit-Edelstahl mit Beständigkeit gegenüber durch Neutronenbestrahlung induziertem Abbau, der dadurch erhalten wird, daß ein Edelstahl einer Wärmebehandlung in fester Lösung bei 1000 bis 1180°C und der so behandelte Stahl dann einer Vergütungsbehandlung bei 600 bis 750°C unterzogen wird, wobei der Edelstahl aus nicht mehr als 0,08 Gew.-% C, nicht mehr als 2,0 Gew.-% Mn, nicht mehr als 1,5 Gew.-% Si, nicht mehr als 0,045 Gew.-% P, nicht mehr als 0,030 Gew.-% S, 8,0 bis 22,0 Gew.-% Ni, 16,0 bis 26,0 Gew.-% Cr, wahlweise nicht mehr als 3,0 Gew.-% Mo, und der Rest aus Fe besteht.

2. Austenit-Edelstahl mit Beständigkeit gegenüber durch Neutronenbestrahlung induziertem Abbau nach Anspruch 1, der dadurch erhalten wird, daß der Edelstahl einer Kaltbearbeitungsbehandlung unterzogen wird, die bis zu 30% zwischen der Wärmebehandlung in fester Lösung und der Vergütungsbehandlung erfolgt.

3. Austenit-Edelstahl mit Beständigkeit gegenüber durch Neutronenbestrahlung induziertem Abbau nach Anspruch 1 oder 2, der 3,0 Gew.-% oder weniger Mo enthält.

4. Austenit-Edelstahl mit Beständigkeit gegenüber durch Neutronenbestrahlung induziertem Abbau nach Anspruch 1, der durch die Wärmebehandlung in fester Lösung bei 1000 bis 1150°C erhalten wird, wobei es sich bei dem Edelstahl um SUS 304 gemäß JIS handelt.

5. Austenit-Edelstahl mit Beständigkeit gegenüber durch Neutronenbestrahlung induziertem Abbau nach Anspruch 1 oder 2, der durch die Wärmebehandlung in fester Lösung bei 1000 bis 1150°C erhalten wird, wobei es sich bei dem Edelstahl um SUS 316 gemäß JIS handelt.

6. Austenit-Edelstahl mit Beständigkeit gegenüber durch Neutronenbestrahlung induziertem Abbau nach Anspruch 1 oder 2, der durch die Wärmebehandlung in fester Lösung bei 1030 bis 1180°C erhalten wird, wobei es sich bei dem Edelstahl um SUS 310S gemäß JIS handelt.

## Revendications

1. Acier inoxydable austénitique présentant une résistance à une dégradation induite par irradiation de neutrons, qui est obtenu par soumission d'un acier inoxydable à un traitement thermique en solution solide, à 1000 jusqu'à 1180°C, et ensuite soumission de l'acier ainsi traité à un traitement de vieillissement à 600 jusqu'à 750°C, **caractérisé en ce que** ledit acier inoxydable présente une teneur en poids de C, inférieure ou égale à 0,08%, une teneur en poids de Mn inférieure ou égale à 2,0%, et une teneur en poids de Si inférieure ou égale à 1,5%, une teneur en poids de P inférieure ou égale à 0,045%, une teneur en poids de S inférieure ou égale à 0,030%, et une teneur en poids de Ni entre 8,0 et 22,0%, entre 16,0 et 26,0 en poids de Cr, et optionnellement une teneur en poids de Mo inférieure ou égale à 3,0%, et le reste étant du fer.

2. Acier inoxydable austénitique présentant une résistance à une dégradation induite par irradiation de neutrons, selon la revendication 1, obtenu par soumission dudit acier inoxydable à un traitement de travail à froid jusqu'à 30%, entre ledit traitement thermique en solution solide, et ledit traitement de vieillissement.

3. Acier inoxydable austénitique selon la revendication 1 ou 2, **caractérisé en ce qu'**il contient 3,0% en poids ou moins de Mo.

4. Acier inoxydable austénitique selon la revendication 1 obtenu par ledit traitement thermique en solution solide à 1000 jusqu'à 1150°C, **caractérisé en ce qu'**il est SUS 304 spécifié dans JIS.

5. Acier inoxydable présentant une résistance à la dégradation induite par irradiation de neutrons, selon la revendication 1 ou 2, qui est obtenu par ledit traitement thermique en solution solide entre 1000 et 1150 °C, **caractérisé en ce qu'**il est SUS 316 spécifié dans JIS.

6. Acier inoxydable austénitique selon la revendication 1 ou 2 obtenu par ledit traitement thermique en solution solide à 1030 jusqu'à 1180°C, **caractérisé en ce qu'**il est SUS 310S spécifié dans JIS.
